# EUROPEAN PATENT APPLICATION

(11) **EP 0 696 427 A1**
(43) Date of publication of application: **14.02.1996**
(21) Application number: 95112565.7
(22) Date of filing: 10.08.1995
(51) Int. Cl.: A23J 1/20, A23C 9/142, A23D 9/06, C11B 5/00

(54) **Method for producing milk fraction having high emulsifying strength and product using the fraction**

(30) Priority: 10.08.1994 JP 208216/94
(71) Applicant: Kyodo Milk Industry Corporation Limited, Chuo-ku Tokyo (JP)
(72) Inventor: Ohishi, Hifumi, Tokyo (JP); Kirihara, Osamu, Tachikawa-shi, Tokyo (JP); Hattori, Takashi, Hamura-shi, Tokyo (JP); Nonomura, Kazuhiko, Sayama-shi, Saitama-ken (JP)
(74) Representative: Lesser, Karl-Bolko, Dipl.-Ing.

(57) **Abstract**

A method of separating / collecting a protein fraction readily reactive with fat / oil from milk by using an ultrafiltration membrane, and a water-soluble fat / oil product using the fraction. In the method, decaseinated butter milk or butter milk powder is ultrafiltrated so that a fraction containing a large amount of proteins having high emulsifying strenght is separated from the decaseinated butter milk or butter milk powder and collected into the reservoir side.

## Description

### BACKGROUND OF THE INVENTION

### 1. Field of the invention

The present invention relates to a method of separating / collecting a fraction EP-160K readily reactive with fat / oil from milk by using an ultrafiltration membrane and relates to a water-soluble fat / oil product using the fraction.

### 2. Description of the related art

Butter milk is a fraction different from the masses of fats / oils which are generated when butter is produced from a cream layer by a churning technique, or the like. This fraction contains phospholipids forming fat globule films, proteins, etc. It is heretofore known that this fraction has high emulsifying strenght, and it has been thought that this emulsifying function is caused by phospholipids. Because the phospholipids are apt to be modified very easily by oxidation, the current state is that phospholipids are mixed as a component of milk in general food.

Further, milk contains proteins such as β-lactoglobulin, α-lactalbumin, etc., which bind easily to lipids (E. M. Brown, "Interactions of β-Lactoglobulin and α-Lactalbumin with Lipids", A Review, J. Dairy Sci., 67, 713-722, 1984; M.C. Diaz de Villegas et al., "Lipid binding by β-lactoglobulin of cow milk", Milchwissenschaft, 42, 357-358, 1987). Further, it is known that WPC (whey protein concentrates) mainly formed from these proteins can be used as an emulsifying agent (M. T. Patel and A. Kilara, "Studies on Whey Protein Concentrates, 2. Foaming and Emulsifying Properties and their Relationships with Physicochemical Properties", J. Dairy Sci., 73, 2731-2740, 1990).

In butter milk, however, there has been found no protein fraction bound to lipids to emulsify fat / oil or make fat / oil watersoluble except the phospholipid fraction as a constituent element of the milk fat globule membrane. Further, when the phospholipid fraction is used, modification by oxidation as described above, or the like, remains as a very serious problem. Further, when WPC is used as an object matter, a problem of β-lactoglobulin as an intensive allergen remains because the technique of separating / collecting β-lactoglobulin and α-Lactalbumin simply has not been developed. Accordingly, there has been no discussion of proteins having high emulsifying strenght and capable of being separated / collected by a safe and simple method nor has there been discussion on products using the proteins.

### SUMMARY OF THE INVENTION

An object of the present invention is to provide a method in which proteins capable of being bound to fat / oil to thereby emulsify the fat / oil or make the fat / oil water-soluble are extracted from butter milk by using mainly a membrane technique to thereby solve the problems arising from the physical property of lipids.

In order to attain the above object, according to the present invention, the method of producing a milk fraction EP-160K comprises ultrafiltrating decaseinated butter milk or butter milk powder to thereby separate a protein fraction (EP-160K) having high emulsifying strenght from the decaseinated butter milk or butter milk powder and collect the protein fraction into a reservoir side.

Further, according to the present invention, provided is milk fraction EP-160K powder produced by freeze drying or spray drying the milk fraction obtained by the above-mentioned method.

Further, according to the present invention, provided is a product using the milk fraction EP-160K obtained by the above-mentioned method, in which proteins obtained in the above-mentioned method and fat / oil are mixed and emulsified to make the fat / oil water-soluble to thereby form the product.

Further, according to the present invention, provided is a product pulverized by freeze drying or spray drying the water-soluble fat / oil obtained as the above-mentioned product using the milk fraction EP-160K.

### BRIEF DESCRIPTION OF THE DRAWINGS

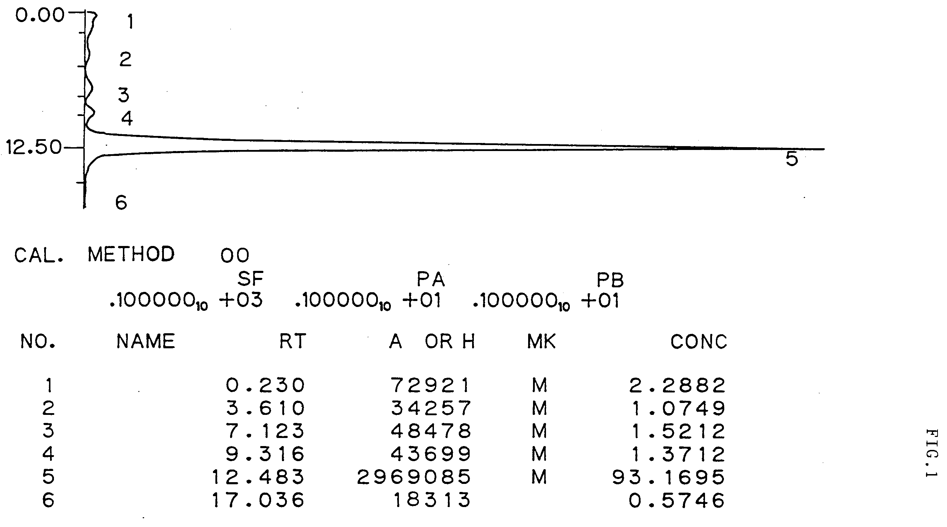

Fig.1 shows a gel filtration chromatograph of proteins having emulsifying strenght which originate in butter milk.

### DETAILED DESCRIPTION OF THE PREFERRED EMBODIMENTS

The present invention is intended so that a degreasing process using an ultrafiltration membrane and an organic solvent is applied to butter milk so that high-purity proteins having high emulsifying strenght are extracted from the butter milk on an industrial scale.

Further, the present invention is also intended so that the proteins obtained as described above are used as an emulsifying agent or as a base material for stabilizing a fatty acid, pulverizing fat / oil, etc.

As described above, butter milk contains casein, etc., other than a matter constituting a fat globule membrane. Because phospholipids contained in butter milk are present in the form of complexes combined with proteins, etc., whereas casein is present in the condition of micelle, the apparent molecular weight of each of phospholipid and casein is very large so that it is impossible to separate phospholipid and casein from each other by an ultrafiltration membrane technique or by a cross-flow MF membrane technique. Fortunately, EP-160K has an apparent molecular weight of about 160.000 and has an isoelectric point in a range from 5,5 to 6,0. Accordingly, EP-160K can be obtained with a good yield by adjusting the pH of butter milk to be in a range from 4,5 to 4,6 to thereby precipitate casein and then treating the supernatant with an ultrafiltration membrane of fraction molecular weight 100.000. Incidentally, butter milk which originates in any kind of milk such as cow milk, goat milk, sheep milk, buffalo milk, etc., or butter milk prepared by reduction can be used as the milk in the present invention.

Several examples of the present invention will be described below.

### Example 1

The method of producing a substance of the invention is as follows. Butter milk prepared by any process, such as fresh butter milk, reduced butter milk, or the like, is provided as a raw material. The pH of the butter milk is adjusted to be in a range of from 4,5 to 4,6, so that the resulting precipitate is removed by a method such as centrifugal separation. Diafiltration is performed by using an ultrafiltration membrane of fraction molecular weight 100.000, so that the residual fraction is collected and freeze-dried or spray-dried. The matter thus dried is degreased in any solvent such as hexane, acetone, chloroform, a methanol mixture solution, or the like, and the dried. Alternatively, after lipids bound to the butter milk have been dissociated therefrom by using a protein modifying agent such as urea, sodium dodecylate, or the like, diafiltration may be performed by using an ultrafiltration membrane of not larger then fraction molecular weight 100.000 to thereby collect the residual fraction.

As a result of the execution of the above method, the ratio of recovery of proteins having high emulsifying strenght was about 0,1 %, that is, about 100 grams of proteins having high emulsifying strenght were recovered from 100 liters of available butter milk. Further, the purity of the proteins was 93 % as shown in Fig.1 and the molecular weight estimated by a gel filtration method was about 16.000. Further, the N terminal of the protein was glutamine.

### Example 2

Into each solution prepared by dissolving 0 to 520 mg of the EP-160K in 50 mM of NH₄HCO₃, 500 mg of soybean oil wax mixed. Each of the resulting mixtures was processed under ice by ultrasonic wave for 60 seconds. A part of each mixture was put in a test tube having an inner diameter of 10 mm and subjected to centrifugal separation under the condition of 2.000 rpm for 15 minutes. The thickness (mm) of a fat / oil layer obtained as the upper layer thereof was measured. The result of the measurement is shown in Table 1.

**TABLE 1**

| Emulsifying Strenght of EP-160K | | | | | | |
|---|---|---|---|---|---|---|
| | EP-160K concentration (mg/30 ml) | | | | | |
| | 0 | 33 | 78 | 156 | 305 | 520 |
| fat layer thickness (mm) | 7.8 | 6.7 | 7.2 | 3.8 | 3.3 | 1.7 |
| particle size (µm) | unmeasurable | 10.7 | 5.57 | 4.47 | 4.36 | 2.62 |

In order to measure the particle size (µm) of the emulsion, the residual part was diluted with 0,1 % sodium dodecylsulfate to obtain a volume 30 times greater than the original volume. The dilute was measured by a particle analyzer (Horiba capa-500). The result is shown in Table 1.

### Example 3

The pH of a solution obtained by dissolving 20 g of EP-160K in 400 ml of deionized water was adjusted to 7,0. Into the solution, 20 g of sardine oil (containing about 30 % of an eicosapentaenoic (EPA)) was mixed. After being stirred at room temperature for one minute by Polytron (from KINEMATICA, Switzerland) at 12.000 rpm, the resulting solution was subjected to centrifugal separation under the condition of 3.000 rpm at 4 °C for 15 minutes. The intermediate layer was collected and filtered using a filter having a pore size of 0,45 µm, so that the filtrate was freeze-dried. About 30 g of dried matter was obtained, and the volume rate of proteins to fat / oil thereof was about 1:1. The dried matter was suspended in a chloroform-methanol mixture solution (1:1) having a volume about 10 times greater then the volume of the dried matter, so that all bound lipids were extracted from the suspension by the filtration method. Chloroform and methanol were removed under reduced pressure and then a fatty acid was fixed and quantified by thin-layer chromatography. In the thin-layer chromotography, HPTLC RP18 was used as a thin-layer plate and a mixture of MeOH, THF and D.W. (80:10:10) was used as a developing solvent. A large part of the fat / oil bound to EP-160K was a fatty acid. Of the fatty acid, about 32 % was EPA and about 4 % was a decosahexaenoic acid (DHA).

### Example 4

The pH of a solution obtained by dissolving 100 g of EP-160K in 10 ml of deionized water was adjusted to 7,0 by using 0,1N NaOH. Into the solution, 100 mg of DHA or 100 mg of EPA was mixed. The resulting mixture was processed by ultrasonic wave at room temperature for 10 seconds. After centrifugal separation (2.000 rpm, 10 minutes, 4 °C), the intermediate layer was removed and freeze-dried under a shaded condition. In the case of DHA-EP-160K, the weight of the dried matter was 51,2 mg and the recovery percentage thereof was 25,6 %. In the case of EPA-EP-160K, the weight of the dried matter was 50,5 mg and the recovery rate thereof was 25,3 %. There was no significant difference between the two cases.

Further, in the former case, the weight of the fatty acid was 19,6 mg, and in the latter case, the weight of the fatty acid was 15,9 mg. The binding ratio of EP-160K to DHA or EPA was in a range of from 1:33 to 1:24 as the mole ratio. Further, in order to examine the stability of the bound fatty acid against oxidation, the aforementioned dried matter was weighted so that the amount of DHA or EPA was adjusted to 10 mg. The sample thus obtained was prepared in accordance with the Osawa's method (Osawa et al, Agric. Biol. Chem., 45(36), 735-739, 1981) and left at room temperature for 5 days while being stirred by a stirrer at a rotational speed of 200 rpm. As the subjects, 10 mg of DHA and 10 mg of EPA were treated in the same manner as described above. The peroxide value was measured in accordance with the Yagi method (K. Yagi, Biochem. Med., 15, 212-216, 1976) using a thiobarbituric acid. Results are shown in Table 2.

**TABLE 2**

| Stabilization of Lipids by EP-160K | | | | |
|---|---|---|---|---|
| | Peroxide Value * | | | |
| | 0 | 1 | 3 | 5 ** |
| DHA | 2.0 | 15.7 | 19.8 | 22.3 |
| EPA | 1.7 | 11.4 | 11.8 | 12.1 |
| DHA-EP-160K | 3.1 | 4.5 | 8.6 | 10.3 |
| EPA-EP-160K | 2.8 | 4.4 | 7.6 | 9.8 |

| | | | | |
|---|---|---|---|---|
| *: The peroxide value is expressed as malondialdehyde (n mol/ml). | | | | |
| **: This number expresses reaction time (day). | | | | |

According to the present invention, not only proteins having high emulsifying strenght could be collected with high purity from butter milk efficiently, but also the bound fatty acid was very stable against oxidation. Accordingly, the present invention contributes to the emulsifying function, lipid stabilization, pulverization, etc., of fat / oil, so that high efficiency of use thereof was obtained.

## Claims

1. A method of producing a milk fraction EP-160K, comprising ultrafiltrating decaseinated butter milk or butter milk powder to thereby separate a protein fraction (EP-160K) having high emulsifying strenght from the decaseinated butter milk or butter milk powder and collect the protein fraction into a reservoir side.

2. Milk fraction EP-160K powder produced by freeze drying or spray drying the milk fraction obtained by the method according to Claim 1.

3. A product using the milk fraction EP-160K obtained by the method according to Claim 1, in which proteins obtained in the method according to Claim 1 and fat / oil are mixed and emulsified to make the fat / oil water-soluble to thereby form said product.

4. A product pulverized by freeze drying or spray drying the water-soluble fat / oil obtained as the product according to Claim 3.
